## Europäisches Patentamt

## European Patent Office

## Office européen des brevets

(19)

(11) Publication number: **0 000 840**
B1

(12) **EUROPEAN PATENT SPECIFICATION**

(45) Date of publication of patent specification: **01.07.81**

(51) Int. Cl.³: **F 16 D 69/02, C 08 J 5/00**

(21) Application number: **78300259.5**

(22) Date of filing: **08.08.78**

(54) Friction materials and their uses.

(30) Priority: **10.08.77 GB 3348277**
**10.08.77 GB 3348377**

(43) Date of publication of application:
**21.02.79 Bulletin 79/4**

(45) Publication of the grant of the European patent:
**01.07.81 Bulletin 81/26**

(84) Designated Contracting States:
**BE CH DE FR GB LU NL SE**

(56) References cited:
**FR - A - 1 363 324**
**FR - A - 2 035 404**
**FR - A - 2 208 487**
**US - A - 3 007 890**

(73) Proprietor: **FERODO LIMITED**
**20 St. Mary's Parsonage**
**Manchester M3 2NL (GB)**

(72) Inventor: **Swinburn, Ronald David**
**"Penlee" Church Lane**
**New Mills Via Stockport Cheshire (GB)**
Inventor: **Bartram, David Trevor**
**28 Spinnerbottom**
**Birchvale Stockport (GB)**

(74) Representative: **Hadfield, Robert Franklin et al,**
**20, St. Mary's Parsonage**
**Manchester M3 2NL (GB)**

Courier Press, Leamington Spa, England.

## Friction materials and their uses

This invention relates to friction materials, and more particularly to friction materials of the kind used for clutch linings, brake linings and similar uses.

Friction materials of this kind are generally composed of a thermoset binder, a fibrous reinforcement, generally asbestos, and various fillers and other additives. Proposals have been made regarding the replacement of asbestos with other materials but without complete success owing to the severe operating temperatures and pressures which the materials are required to withstand under repeated application without failure or deterioration in friction properties.

According to the present invention a friction material comprises a thermoset binder, a fibrous reinforcement and other fillers and additives, the thermoset binder making-up 15 or 40 per cent by volume of the material, at least half of the thermoset binder by volume being a thermosetting resin, characterised in that as the only reinforcing fibres, the material contains a mixture of an inorganic fibre which is a staple fibre selected from steel fibres, glass fibres, mineral wool fibres, silica fibres and ceramic fibres of the alumino-silicate type with at least one organic fibre which is in the form of a discrete reinforcing fibre or a pulp, the amount of inorganic fibre being in the range 3 to 40% by volume of the material and the amount of organic fibre being in the range 3 to 20% by volume of the material.

Preferably the fibrous reinforcement constitutes 10 to 50 per cent by volume of the friction material. The preferred amount of organic fibrous material is in the range 3 to 18 per cent by volume of the material.

In general when the inorganic fibrous material is in the form of metal fibres such as steel fibre its amount will preferably be in the lower end of preferred range e.g. 3 to 15 per cent by volume, whilst when the inorganic fibrous material is in the form of glass fibre its amount will preferably be in the higher part of the preferred range e.g. 9 to 40 per cent by volume.

The organic fibrous material consists of short lengths of fibre and may comprise cellulose fibres from sources such as wood pulp, jute, sisal, or cotton linters. A function of the organic fibrous material is to convey green strength to the material during production, and to this end the organic fibres must be opened fibre, when natural products are used. Thus wood pulp is a suitable organic fibrous material whilst wood flour is not since the fibres of the wood are bound tightly by resin and wood flour acts only as a filler.

The inorganic fibrous material is also in the form of short lengths of fibre and is the main reinforcement of the friction material. Where mineral wool is being used as the inorganic reinforcement it is preferred that it contains a minimum of the small non-fibrous agglomerates of mineral usually referred to as shot. Where it is desired to use large quantities of glass fibres in a particular formulation it is advantageous to use milled glass fibres or chopped strand glass i.e. glass in the form of continuous bundles of fine glass filaments, bound together with coatings of sizes commonly used by the glass fibre industry, then chopped into short strands composed of a multitude of fine parallel filaments. The preferred chopped strand length is 3 to 13 mm. However, shorter fibres may be used if desired. It is also desirable to use glass whose individual filaments are coated with a coupling agent applied during the manufacturing process to improve the bond between the glass and the thermoset binder.

The preferred metal fibre is steel fibre, which may be mild steel and is preferably in the form of short lengths of fine steel fibre e.g. diameter of the order of 0.125 mm and length in the range 1 to 5 mm.

In the friction material at least half of the binder by volume is a thermosetting resin e.g. a phenol-formaldehyde resin, although the binder may also include a heat and chemical resistant natural or synthetic rubber such as nitrile rubber.

Preferably the binder comprises a phenol-formaldehyde resin, and more preferably a mixture of such a resin with a heat and chemical resistant cured rubber such as nitrile rubber.

The other fillers and additives in the friction material may be taken from a number of classes of such materials, and the nature and amount of each such material is chosen to achieve the particular desired cost/property combination. Inorganic particulate fillers such as barytes, whiting, rottenstone; reinforcing fillers such as mica; friction and wear modifiers including lubricants such as graphite or molybdenum disulphide; antimony trisulphide, metals such as copper, zinc, brass or aluminium in the form of wires, turnings or particles may each be incorporated as desired. Friction dusts or particles composed of cured and ground thermoset resins or rubbers may also be added.

The compositions of the present invention which have total fibre contents below about 40% by volume are particularly suited to use in the method of producing friction materials which consists of:

(a) intimately mixing all the ingredients of the composition together, uncured liquid resin binder serving to bind the compounded mass together or tacky uncured rubber binder serving the same purpose

(b) forming the composition into a sheet

(c) shaping the sheet where necessary (as in the manufacture of curved linings for drum brakes) and

2

(d) curing the material.

In this process the sheet is required to have adequate strength before curing and we have found that the organic fibres mixed with the inorganic fibres provide the necessary strength. This process is particularly suited to the production of brake linings.

Alternatively, particularly for those compositions which have a total fibre content above about 30% by volume the friction material of this invention is suitable for manufacture by a slurry technique in which the fibres, binder and other ingredients are dispersed in water by means of a beater to form a slurry. The slurry is then formed into a sheet by deposition on a wire screen or felt, a pulp being included to facilitate deposition of the material on the screen, and the water sucked out. The sheet is then dried, cut into desired shapes and cured by application of heat and pressure. This technique is particularly suited to the manufacture of clutch facings.

The invention will now be illustrated in the following Examples.

Examples 1 to 3

Annular clutch facings of outside diameter 152.4 mm and inside diameter 127 mm were manufactured by the slurry technique mentioned above from friction materials having the formulations given in Table 1 below, all quantities being given as parts by volume.

TABLE 1

| Example No. | 1 | 2 | 3 |
|---|---|---|---|
| Binder | | | |
| Phenol-formaldehyde resin | 25 | 26 | 26 |
| Fibrous materials | | | |
| Glass fibres (3mm—6mm) | 40 | 25 | — |
| Kaowool (Alumino-silicate fibre)* | — | — | 30 |
| Cellulose (wood pulp) | 20 | 20 | 5 |
| Fillers etc. | | | |
| Friction dust | — | 17 | 17 |
| Whiting | 12 | 14 | 14 |
| Antimony sulphide | — | 5 | 5 |
| Brass | 3 | 3 | 3 |

* "Kaowool" (Registered Trade Mark) is commercially available from Morganite Ceramic Fibres Ltd. and that used had a fibre length 6 mm.

The clutch facings produced, when run against a cast iron counterface on a small scale friction and wear testing machine, showed lower wear rates and higher coefficients of friction than similar materials containing asbestos.

The coefficients of friction determined were in the range 0.3 to 0.4 in a 203.2mm × 146.05mm coil spring clutch against a cast iron flywheel and pressure plate.

Example 4

An annular clutch facing, 203.2mm outside diameter, was manufactured by the slurry technique mentioned above from the formulation given in Table II below.

**0 000 840**

TABLE II

| Ingredient | Parts by Volume |
|---|---|
| Nitrile rubber latex | 20 |
| Phenol-formaldehyde resin | 20 |
| Milled glass fibres (190$\mu$ nominal length 9—13$\mu$ diam.) | 30 |
| Wood pulp | 10 |
| China clay | 10 |
| Sulphur | 1 |
| Bentonite | 2 |
| Ground rubber crumb | 6 |

The clutch facings so produced had a burst strength of 11,000 to 11,500rpm at ambient temperature and 6,750 to 8,000rpm at 200°C, (Burst strength is measured by rotating the clutch facing about its axis at increasing rpm until it breaks through centrifugal force), and a cross breaking strength of 75,842 to 82,737KN/m² (cross breaking strength is measured by placing a sample of the facing on two supports 25.4mm apart, and then measuring the load required midway between the supports to break the facing).

Example 5

An annular clutch facing 152.4mm outside diameter was manufactured by the slurry technique from the formulation given in Table III.

TABLE III

| Ingredient | Parts by volume |
|---|---|
| Nitrile rubber latex | 3.25 |
| Phenol-formaldehyde resin | 15 |
| 3mm long chopped strand glass fiber (304 tex) | 25 |
| Wood pulp | 10 |
| Whiting | 21.25 |
| Brass | 3 |

The facings so produced had a burst strength of 10,000 to 12,500rpm at ambient temperature, and 7,000 to 7,500rpm at 200°C.

Example 6

An annular clutch facing of 203.2mm outside diameter was manufactured by the slurry technique from the formulation given in Table IV.

4

TABLE IV

| Ingredients | Parts by Volume |
|---|---|
| Phenol-formaldehyde resin | 26 |
| Milled glass fibre (190μ nominal length, 9—12μ diameter) | 30 |
| Wood pulp | 10 |
| Friction dust | 17 |
| Antimony trisulphide | 2 |
| Brass | 3 |
| Whiting | 9 |
| Sulphur | 3 |

The facings so produced had a burst strength of 11,000 to 11,500rpm at ambient temperature and 9,250 to 9,750rpm at 200°C, and a cross breaking strength of 82,737KN/m².

The previous Examples all illustrate the use of the friction materials of this invention in clutch facings. The following examples illustrate the use of the materials in brake linings.

Examples 7 to 15

Compositions were compounded to the formulations given below in Tables V, and VI rolled out into sheet form, shaped into a curved form suitable for brake linings, cured and made into sample brake linings. The curing was carried out in an oven at 238°C for a period of 90 minutes.

In each case the friction and wear properties of the material as determined on a 254mm × 69.85mm hydraulic 2 leading shoe brake rig mounted on a dynamometer were found to be comparable to conventional asbestos containing brake-linings.

In the tables below all quantities are given as parts by volume.

TABLE V

| Example No. | 7 | 8 | 9 | 10 |
|---|---|---|---|---|
| **Binder** | | | | |
| Liquid phenolic resin modified with cashew nut oil | 25 | 27 | 24 | 27 |
| Uncured powdered nitrile rubber | 0 | 0 | 12 | 0 |
| Dry resin-phenolic | 5 | 4 | 0 | 7 |
| **Inorganic Fibre** | | | | |
| Steel (3 to 6mm staple) | 0 | 3 | 3 | 0 |
| Glass (3 to 13mm staple) | 9 | 0 | 0 | 3 |
| **Organic Fibre** | | | | |
| Jute 9 | 9 | 9 | 9 | 9 |
| Cotton | 0 | 0 | 0 | 0 |

**0 000 840**

TABLE V (continued)

| Example No. | 7 | 8 | 9 | 10 |
|---|---|---|---|---|
| **Fillers** | | | | |
| Wood flour | 5 | 5 | 5 | 5 |
| Whiting | 20 | 20 | 20 | 20 |
| Crumb rubber (cured) | 2.5 | 5 | 5 | 5 |
| Graphite | 2.5 | 2.5 | 0 | 2 |
| Disintegrated cured resin particle and dust | 22 | 24.5 | 22 | 22 |
| Coefficient of friction at 48KM.P.H. at 70°C | 0.37 | 0.39 | 0.36 | 0.37 |

TABLE VI

| Example No. | 11 | 12 | 13 | 14 | 15 |
|---|---|---|---|---|---|
| **Binder** | | | | | |
| Liquid phenolic resin modified with cashew nut oil | 23.5 | 25.5 | 23.5 | 25 | 15 |
| Uncured powdered nitrile rubber | 0 | 0 | 4 | 0 | 15 |
| Dry resin-phenolic | 9.0 | 0 | 0 | 0 | 0 |
| **Inorganic Fibre** | | | | | |
| Steel (3 to 6mm staple) | 8.5 | 8.5 | 8.5 | 13.5 | 0 |
| Glass (3 to 13mm staple) | 0 | 0 | 0 | 0 | 25 |
| **Organic Fibre** | | | | | |
| Jute | 11.5 | 11.5 | 11.5 | 4.5 | 5 |
| **Fillers** | | | | | |
| Whiting | 19 | 26 | 24 | 19 | 14 |
| Crumb rubber (cured) | 5 | 5 | 5 | 4.5 | 3 |
| Graphite | 2.5 | 2.5 | 2.5 | 14.5 | 10 |
| Disintegrated cured resin particle and dust | 21 | 21 | 21 | 19 | 13 |
| Coefficient of friction at 48 KM.P.H. at 70°C | 0.40 | 0.39 | 0.42 | 0.43 | 0.32 |

**Claims**

1. A friction material comprising a thermoset binder, a fibrous reinforcement and other fillers and additives, the thermoset binder making up 15 to 40% by volume of the material at least half of the thermoset binder by volume being a thermosetting resin characterised in that as the only reinforcing fibres, the material contains a mixture of an inorganic fibre which is a staple fibre selected from steel fibres, glass fibres, mineral wool fibres, silica fibres and ceramic fibres of the alumino silicate type with at least one organic fibre which is in the form of a discrete reinforcing fibre or a pulp, the amount of inorganic fibre being in the range 3 to 40% by volume of the material and the amount of the organic fibre being in the range 3 to 20% by volume of the material.

2. A friction material according to Claim 1 in which the fibrous reinforcement constitutes 10 to 50% by volume of the friction material.

3. A friction material according to claim 1 characterised in that the material contains:

(a) as the organic reinforcing fibre a discrete reinforcing fibre sufficient to convey green strength to the material before the binder has been thermoset, to permit the material to be shaped before the binder has been thermoset, the amount of organic fibre being in the range 3 to 11.5 per cent by volume of the material and

(b) as inorganic reinforcing fibre steel fibre in an amount of 3 to 15 per cent by volume of the material of fibres of glass, mineral wool, silica or alumino-silicate type in an amount of 9 to 40 per cent by volume.

4. A friction material according to Claim 1 characterised in that the material contains:

(a) as the organic reinforcing fibre a pulp to facilitate deposition of the material from a slurry during manufacture,

(b) as inorganic reinforcing fibre, fibres of glass, mineral wool, silica or alumino-silicate type in an amount of 25 to 40% by volume of the material.

5. A friction material according to any one of the preceding claims in which the organic fibrous material is a natural fibre.

6. A friction material according to Claim 3 in which the fibre comprises jute or sisal.

7. A friction material according to Claim 4 in which the pulp comprises wood pulp.

8. A friction material according to any one of the preceding Claims in which the binder comprises a phenol-formaldehyde resin.

9. A friction material according to any one of the preceding Claims in which the binder includes a heat and chemical resistant rubber.

10. A friction material according to Claim 9 in which said rubber is nitrile rubber.

11. A friction material according to any one of the preceding Claims which comprises at least one inorganic particulate filler.

12. A friction material according to any one of the preceding claims which includes one or more friction or wear modifiers selected from graphite, molybdenum disulphide, antimony trisulphide and copper, zinc, brass and aluminium.

13. A clutch facing comprising a friction material as claimed in any one of the preceding Claims.

14. A brake lining comprising a friction material as claimed in any one of the preceding Claims.

**Revendications**

1. Matière de friction qui comprend un liant thermodurci, un agent de renforcement fibreux et d'autres agents de charge et additifs, le liant thermodurci constituant 15 à 40% en volume de la matière, au moins la moitié en volume du liant thermodurci étant une résine thermodurcissable, caractérisée en ce que la matière contient comme uniques fibres de renforcement un mélange d'une fibre inorganique, qui est une fibre coupée choisie parmi les fibres d'acier, les fibres de verre, les fibres de laine minérale, les fibres de silice et les fibres céramiques du type des aluminosilicates, avec au moins une fibre organique se présentant sous forme d'une fibre de renforcement distincte ou d'une pulpe, la quantité de fibres inorganiques tombant dans l'intervalle de 3 à 40% en volume de la matière et la quantité de fibres organiques tombant dans l'intervalle de 3 à 20% en volume de matière.

2. Matière de friction suivant la revendication 1 dans laquelle l'agent de renforcement fibreux constitue 10 à 50% en volume de la matière de friction.

3. Matière de friction suivant la revendication 1, caractérisée en ce que la matière contient:

(a) comme fibre de renforcement organique, une fibre de renforcement distincte en quantité suffisante pour conférer de la résistance à l'état vert à la matière avant que le liant soit thermodurci afin de permettre que la matière soit façonnée avant que le liant ait été thermodurci, la quantité de fibres organiques tombant dans l'intervalle de 3 à 11,5% en volume de la matière;

(b)   comme fibre de renforcement inorganique, de la fibre d'acier en quantité de 3 à 15% en volume de la matière ou des fibres de verre, de laine minérale, de silice ou de type aluminosilicate en quantité de 9 à 40% en volume.

4. Matière de friction suivant la revendication 1, caractérisée en ce que la matière contient:

(a)   comme fibre de renforcement organique, une pulpe pour faciliter le dépôt de la matière à partir d'une dispersion pendant la fabrication;

(b)   comme fibre de renforcement inorganique, des fibres de verre, de laine minérale, de silice ou de type aluminosilicate en quantité de 25 à 40% en volume de la matière.

5. Matière de friction suivant l'une quelconque des revendications précédentes dans laquelle la matière fibreuse organique est une fibre naturelle.

6. Matière de friction suivant la revendication 3 dans laquelle la fibre comprend de jute ou du sisal.

7. Matière de friction suivant la revendication 4 dans laquelle la pulpe comprend de la pulpe de bois.

8. Matière de friction suivant l'une quelconque des revendications précédentes dans laquelle le liant comprend une résine phénol-formaldehyde.

9. Matière de friction suivant l'une quelconque des revendications précédentes dans laquelle le liant comprend un caoutchouc résistant à la chaleur et aux agents chimiques.

10. Matière de friction suivant la revendication 9 dans laquelle le caoutchouc est du caoutchouc nitrile.

11. Matière de friction suivant l'une quelconque des revendications précédentes qui comprend au moins une matière de charge particulaire inorganique.

12. Matière de friction suivant l'une quelconque des revendications précédentes qui comprend un ou plusieurs modificateurs de friction ou d'usure choisis entre le graphite, le disulfure de molybdène, le trisulfure d'antimoine et le cuivre, le zinc, le laiton et l'aluminium.

13. Garniture d'embrayage qui comprend une matière de friction suivant l'une quelconque des revendications précédentes.

14. Garniture de frein qui comprend une matière de friction suivant l'une quelconque des revendications 1 à 13.


**Patentansprüche**

1. Reibungsmaterial, enthaltend einen hitzehärtenden Binder, eine fasrige Verstärkung und andere Füllstoffe und Zusätze, wobei der hitzehärtbare Binder 15 bis 40 Vol.-% des Materials ausmacht, und wobei wenigstens das halbe Volumen des hitzehärtenden Binders ein hitzehärtendes Harz ist, dadurch gekennzeichnet, daß das Material als einzige Verstärkungsfasern ein Gemisch einer anorganischen Faser, die eine Stapelfaser aus der Gruppe Stahlfasern, Glasfasern, Mineralwollefasern, Siliziumdioxidfasern und Keramikfasern vom Aluminosilikattyp ist mit wenigstens einer organischen Faser, die in Form einer diskreten Verstärkungsfaser oder eine Pulpe vorliegt, enthält, und wobei die Menge an anorganischer Faser im Bereich von 3 bis 40 Vol.-% des Materials und die Menge an organischer Faser im Bereich von 3 bis 20 Vol.-% des Materials vorliegt.

2. Reibungsmaterial nach Anspruch 1, dadurch gekennzeichnet, daß die fasrige Verstärkung 10 bis 50 Vol.-% des Reibungsmaterials ausmacht.

3. Reibungsmaterial nach Anspruch 1, dadurch gekennzeichnet, daß das Material enthält:

(a)   als organische Verstärkungsfaser eine diskrete Verstärkungsfaser, die ausreicht, um dem Material Gründfestigkeit zu verleihen, bevor der Binder hitzegehärtet ist, und die Formung des Materials gesattet, bevor der Binder hitzegehärtet ist, wobei die Menge an organischer Faser im Bereich von 3 bis 11,5 Vol.-% des Materials vorliegt, und

(b)   als anorganische Verstärkungsfaser Stahlfaser in einer Menge von 3 bis 15 Vol.-% des Materials, oder Fasern aus Glas, Mineralwolle, Siliziumdioxid oder vom Aluminosilikattyp in einer Menge von 9 bis 40 Vol.-%

4. Reibungsmaterial nach Anspruch 1, dadurch gekennzeichnet, daß das Material enthält:

(a)   als organische Verstärkungsfaser eine Pulpe (Stoff), um die Abscheidung des Materials aus einer Aufschlämmung oder während der Herstellung zu erleichtern,

(b)   als anorganische Verstärkungsfaser Fasern aus Glas, Mineralwolle, Siliziumdioxid oder vom Aluminosilikattyp in einer Menge von 25 bis 40 Vol.-% des Materials.

5. Reibungsmaterial nach einem der vorhergehenden Ansprüche, dadurch gekennzeichnet, daß das organische fasrige Material eine natürliche Faser ist.

6. Reibungsmaterial nach Anspruch 3, dadurch gekennzeichnet, daß die Faser Jute oder Sisal enthält.

7. Reibungsmaterial nach Anspruch 4, dadurch gekennzeichnet, daß die Pulpe Zellstoff enthält.

8. Reibungsmaterial nach jedem der vorhergehenden Ansprüche, dadurch gekennzeichnet, daß der Binder ein Phenol/Formaldehyd-Harz enthält.

9. Reibungsmaterial nach irgendeinem der vorhergehenden Ansprüche, dadurch gekennzeichnet, daß der Binder einen gegen Hitze und Chemikalien beständigen Kautschuk enthält.

10. Reibungsmaterial nach Anspruch 9, dadurch gekennzeichnet, daß dieser Kautschuk ein Nitrilkautschuk ist.

11. Reibungsmaterial nach irgendeinem der vorhergehenden Ansprüche, dadurch gekennzeichnet, daß es wenigstens einen anorganischen, teilchenförmigen Füllstoff enthält.

12. Reibungsmaterial nach irgendeinem der vorhergehenden Ansprüche, dadurch gekennzeichnet, daß es eines oder mehrere Modifizierungsmittel für die Reibung oder Abnutzung enthält, die aus Graphit, Molybdändisulfid, Antimontrisulfid und Kupfer, Zink, Messing und Aluminium ausgewählt sind.

13. Kupplungsbelag, enthaltend ein Reibungsmaterial nach irgendeinem der vorhergehenden Ansprüche.

14. Bremsbelag, enthaltend ein Reibungsmaterial nach irgendeinem der vorhergehenden Ansprüche.